# EUROPEAN PATENT SPECIFICATION

(11) **EP 3 671 417 B1**
(45) Date of publication and mention of the grant of the patent: **27.09.2023**
(21) Application number: 18382939.9
(22) Date of filing: 18.12.2018
(51) Int. Cl.: G06F 3/0482, G06F 3/0488, B60K 37/06

(54) **A VEHICLE WINDOW ADJUSTMENT CONTROL SYSTEM, A COMPUTER-IMPLEMENTED METHOD AND A COMPUTER PROGRAM, FOR CONTROLLING A PLURALITY OF WINDOWS ON A VEHICLE**
FAHRZEUGFENSTERVERSTELLSTEUERUNG, COMPUTERIMPLEMENTIERTES VERFAHREN UND COMPUTERPROGRAMM ZUM STEUERN MEHRERER FENSTER EINES FAHRZEUGS
SYSTÈME DE COMMANDE DE RÉGLAGE DE FENÊTRE DE VÉHICULE, PROCÉDÉ MIS EN UVRE PAR ORDINATEUR ET PROGRAMME INFORMATIQUE POUR COMMANDER UNE PLURALITÉ DE FENÊTRES SUR UN VÉHICULE

(43) Date of publication of application: 24.06.2020
(73) Proprietor: Seat, S.A., 08760 Martorell (ES)
(72) Inventor: RODRIGUEZ BOSCH, Ruben, 08760 Martorell (ES); ALCOCER REDONDO, Antonio, 08760 Martorell (ES); GARCÍA PAMPLONA, Jose Antonio, 08760 Martorell (ES)
(74) Representative: Ponti & Partners, S.L.P

(56) References cited:
- EP-A2- 2 266 833
- WO-A1-2016/200647
- US-A1- 2016 227 123
- US-A1- 2016 305 176

## Description

### FIELD OF THE INVENTION

The present invention relates, in a first aspect, to a vehicle window adjustment control system, configured to control a plurality of windows on a vehicle through a graphical user interface (GUI), minimizing significantly the time that a user must keep looking at the screen of the GUI to control the operation of the windows.

A second aspect of the present invention relates to a computer-implemented method, adapted to operate the system of the first aspect.

A third aspect of the present invention relates to a computer program, adapted to implement the steps of the method of second aspect.

### BACKGROUND OF THE INVENTION

EP2266833 discloses a vehicle window adjustment control system, configured to control a plurality of windows on a vehicle, comprising the features of the preamble of claim 1, i.e.:
- a computing entity configured to provide control signals to respective actuators of said plurality of windows to control the same to open/close; and
- a graphical user interface comprising a touch screen operatively connected to said computing entity to generate said control signals in response to the detection of a user touching on regions of the at least one touch screen.

As shown in Figure 9 and associated description of EP2266833, in order to control the operation of the windows, a user must accurately touch specific locations of a window adjustment screen, particularly locations of the touch screen displaying corresponding touch-enabled icons depicting up and down arrows placed at small edge areas of the screen, those up and down arrows being used for both the selection and the control of the desired window.

Therefore, a user who wants to open or close one of the vehicle's window must keep looking at the screen at all times, to be sure that he/she is controlling the desired window and according to the desired action (opening or closing), which, if the user is the vehicle's driver, whether forces the driver to perform that control when the vehicle is stopped or, if not, causes the driver to look away from the forward roadway so that the chances of having an accident are increased.

US 2016/305176 also discloses such window adjusting method.

It is, therefore, necessary to provide an alternative to the state of the art which covers the gaps found therein, by providing a vehicle window adjustment control system that is more efficient than those known in the state of the art, specifically by allowing to minimize significantly the time that a user must keep looking at the screen to control the operation of the windows, which can be critical when the user is the vehicle's driver.

### SUMMARY OF THE INVENTION

To that end, the present invention relates, in a first aspect, to a vehicle window adjustment control system, configured to control a plurality of windows on a vehicle, according to the claims.

The windows to which the system of the first aspect of the present invention is designed for are power windows, i.e. windows which are rolled up and rolled down by means of power window motors which constitute or are operatively connected to the above mentioned actuators.

By means of the above mentioned generation of control signals conditioned to the described sequential detections, the user only has to look at the screen to look for the touch-enabled icon located on the first region, to select the window(s) to be controlled, as once that selection has been made the user has just to touch and drag his/her finger on any locations of the second region of the touch screen, without having to look for any icon therein, i.e. without having to keep looking at the screen of the GUI to control the operation of the selected window(s), thus solving the above mentioned problem that the systems of the prior art have.

For an embodiment of the system of the first aspect of the present invention, the computing entity is configured to generate said opening/closing control signals even when the drag motion of the corresponding detected pressure comprises also respective X components following said X dimension, no matter with which direction.

According to a further embodiment, the computing entity is configured to generate the opening/closing control signals independently of the length of the drag motion.

In order to address a problem that could arise if a user performing the above mentioned drag motion reached an edge of the touch screen before the desired opening/closing state of the selected window(s) has been achieved, for a preferred embodiment, the computing entity is configured to maintain the generation of the opening or closing control signals, and their provision to the respective actuators, when the drag motion has stopped (for example at the above mentioned edge of the touch screen, or at any other position) but the exerted pressure has not yet been released, i.e. the user has not released his/her finger from the touch screen.

For a further embodiment, the above mentioned drag motion is a previous drag motion and the computing entity is configured to change the opening or closing control signal previously generated and their provision to the respective actuators, when the GUI detects on the touch screen a further drag motion that comprises at least a Y component following the above mentioned Y dimension and a direction opposite to the direction of the previous drag motion, wherein between the previous drag motion and the further drag motion the exerted pressure has not been released. With this further embodiment, a user which has opened or closed too much a selected window and wants to adjust the position of the selected window does not have to release his/her finger from the touch screen and look for another touch-enabled icon, but just perform the above mentioned further drag motion in opposite direction to the previous one.

In the vehicle window adjustment control system of the first aspect of the present invention, for an embodiment, the computing entity is configured to generate the opening/closing control signals independently of the speed of the drag motion(s). Therefore, the generated opening/closing control signals are only based on the Y component of the drag motion, being independent of the length, speed or the X component of said drag motion, resulting in a simplified and most efficient control signal generation.

For an embodiment, the first region displays also one or more touch-enabled icons identifying two or more windows of the plurality of windows to allow a user to select said two or more windows to be controlled simultaneously. Therefore, a user could control simultaneously the operation of all the windows of the vehicle.

According to an embodiment, the GUI is configured to display the above mentioned first region at a first edge area of the touch screen, and the second region on an adjacent area of the touch screen that is at least twice larger than said first edge area, so that the above mentioned objective of minimizing significantly the time that a user must keep looking at the screen to control the operation of the window(s) is met in an even higher degree, as a user who has selected on the first edge area the window(s) to be controlled does not have to keep looking at the screen of the GUI to control the operation of the selected window(s) because as far as he/she performs a drag motion on any location of said adjacent area the desired opening/closing action of the window(s) is carried out. The window adjustment control screen may be understood as a touchpad or an area of the touch screen with no touch-enabled icons displayed thereon. Thus, the initial contact on the second region can be performed at any location of said second region, minimizing the attention paid by the user to perform the opening or closing control of the at least one window.

For an implementation of said embodiment, the GUI is configured to display the second region only after the window(s) to be controlled has been selected by a contact on at least one of the touch-enabled icons located on the first region.

For an alternative implementation, the GUI is configured to display the second region even when no window to be controlled has yet been selected, but also to block the generation of control signals until the window(s) to be controlled has been selected by a contact on at least one of the touch-enabled icons located on the first region. Therefore, the vehicle window adjustment control system guides the sequence of inputs to be performed by the user, avoiding missuses of said control system.

According to a further embodiment, the GUI is configured to display a third region displaying touch-enabled icons identifying desired preset opening/closing positions for one or more windows of the plurality of windows (for example, the rear passenger windows half opened and the driver and front passenger windows closed), wherein the GUI is configured to detect a contact on said touch-enabled icons identifying desired preset opening/closing positions, and wherein the computing entity is configured to generate opening/closing control signals according to the contact detected touch-enabled icon displayed on said third region.

Preferably, the above mentioned desired preset opening/closing positions are programmable by a user, the GUI and computing entity being configured to program and thus set one or more desired opening/closing positions when a contact is made, and maintained along a predetermined time, on a location of the touch screen displaying a respective one of the touch-enabled icons displayed on said third region. Alternative manners of programming the desired preset opening/closing positions are also envisaged by the system of the first aspect of the present invention.

According to an embodiment, the vehicle window adjustment control system of the first aspect of the present invention further comprises one or more position detectors operatively connected to the computing entity and configured and arranged to detect current opening/closing positions of the plurality of windows, the computing entity being configured to set as the desired one or more opening/closing positions one or more of the corresponding detected current opening/closing positions.

According to a further embodiment, the GUI is configured to display on the first region the current opening/closing position state of the plurality of windows while being selected, and also to display on the second region the current opening/closing state of the selected window(s). The current opening/closing position state is detected by means of the above mentioned position detector(s).

The present invention also relates, in a second aspect, to a computer-implemented method, for controlling a plurality of windows on a vehicle, comprising performing the following steps:
- generating control signals, by means of a computing entity, in response to the detection of a user touching inputs determined by at least one touch screen comprised by a graphical user interface and that is operatively connected to said computing entity; and
- providing said control signals from said computing entity to respective actuators of said plurality of windows to control the same to open/close.

In contrast to the methods known in the art, the one of the second aspect of the present invention, in a characterizing manner, comprises using the GUI to display in a displaying area of the touch screen having Y and X dimensions:
- a first region displaying touch-enabled icons, wherein each touch-enabled icon is associated to one of said plurality of windows, allowing a user to select at least one window to be controlled; and
- a second region displaying a window adjustment control screen associated to the selected at least one window;

the method further comprises sequentially detecting on the at least one touch screen, using the GUI in collaboration with said computing entity:
   - a contact on at least one of the touch-enabled icons located on said first region, to select the at least one window to be controlled;
   - an initial contact on any location of said second region; and
   - a pressured exerted according to a drag motion from said initial contact to any location of the second region,
and the method further comprises the computing entity generating as said control signals:
   - an opening control signal for opening the selected at least one window, when the drag motion of the detected pressure comprises at least a Y component following said Y dimension, according to a first direction, and
   - a closing control signal for closing the selected at least one window, when the drag motion of the detected pressure comprises at least a Y component following said Y dimension, according to a second direction opposite to said first direction.

The computer-implemented method of the second aspect of the present invention is adapted to operate the system of the first aspect.

A third aspect of the present invention relates to computer program, comprising code instructions that when executed on one or more processors implement the steps of the method of the second aspect of the invention.

A computer program product comprising a non-transitory computer-readable storage medium with the above mentioned code instructions encoded therein, is also provided by the present invention.

### BRIEF DESCRIPTION OF THE FIGURES

In the following some preferred embodiments of the invention will be described with reference to the enclosed figures. They are provided only for illustration purposes without however limiting the scope of the invention.

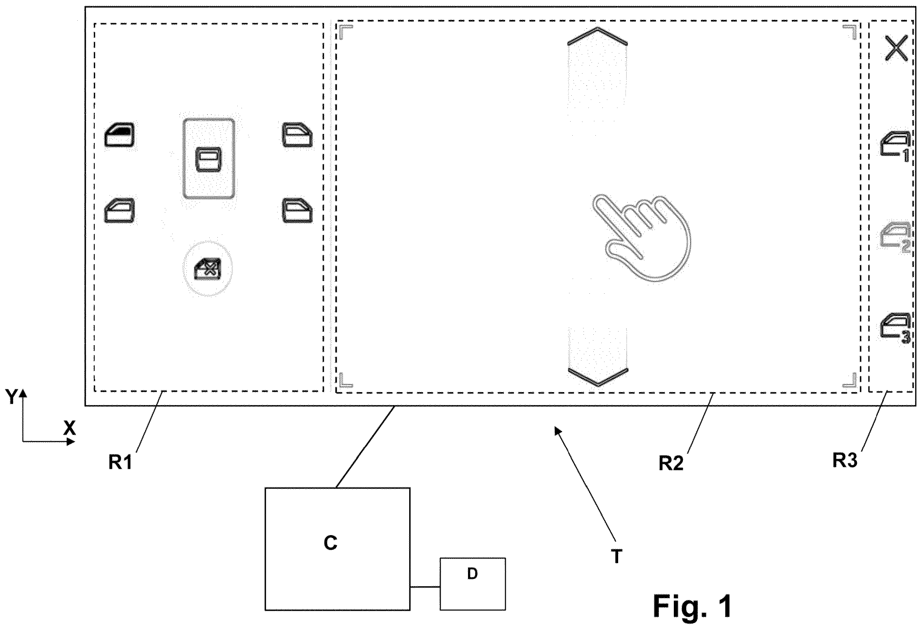

Figure 1 schematically shows the system of the first aspect of the present invention, for an embodiment for which the GUI comprises a touch screen preferably located on the dashboard of a vehicle to allow the driver and the front passenger to control the operation of all the vehicle's windows.

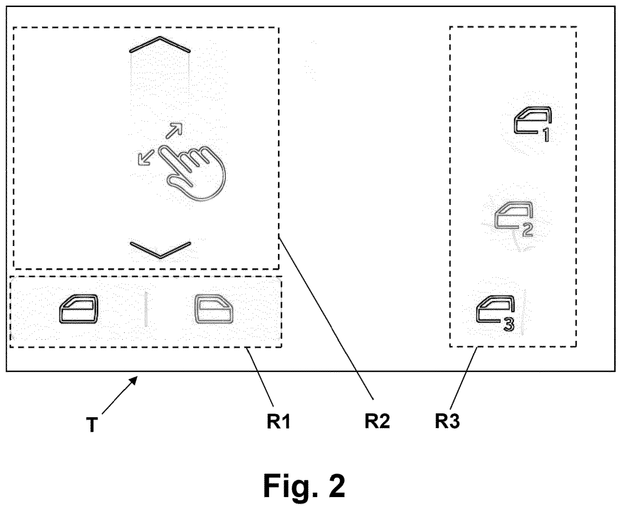

Figure 2 schematically shows the GUI of the system of the first aspect of the present invention, for an embodiment for which the GUI comprises a touch screen preferably located in front of the rear passengers of a vehicle (such as mounted on the backrest of the front seats of the vehicle) to allow those rear passengers to control the operation of only the rear passenger windows.

### DESCRIPTION OF THE PREFERRED EMBODIMENTS

Figure 1 shows an embodiment of the vehicle window adjustment control system of the first aspect of the present invention, for which the system comprises:
- a computing entity C configured to provide control signals to respective actuators of a plurality of windows of a vehicle, to control the same to open/close;
- one or more position detectors D operatively connected to the computing entity C and configured and arranged to detect current opening/closing positions of the plurality of windows; and
- a graphical user interface GUI comprising a touch screen T operatively connected to the computing entity C, wherein the control signals provided by the computing entity C are generated in response to the detection of a user touching inputs determined by the touch screen T.

For the embodiment illustrated in Figure 1, the touch screen is preferably located on the dashboard of a vehicle to allow the driver and the front passenger to control the operation of all the vehicle's windows, although it could be located at other locations.

As shown in Figure 1, the GUI is configured to display in a displaying area of the touch screen T having Y and X dimensions:
- a first region R1, at a first edge area of the touch screen T, that displays touch-enabled icons, particularly in the form of the different windows of the vehicle, including a panoramic roof window (optional), wherein each touch-enabled icon is associated to one of the plurality of windows, allowing a user to select the window(s) to be controlled; and
- a second region R2, located on an adjacent area of the touch screen T that is at least twice larger than the first edge area, that displays a window adjustment control screen associated to the selected window(s).

The GUI is configured to sequentially detect, in collaboration with the computing entity C, on the touch screen T:
- a contact on one or more of the touch-enabled icons located on the first region R1, to select the window(s) to be controlled;
- an initial contact on any location of the second region R2; and
- a pressure exerted according to a drag motion from said initial contact to any location of the second region R2.

And the computing entity C is configured to generate as the above mentioned control signals:
- an opening control signal for opening the selected window(s), when the drag motion of the detected pressure comprises at least a Y component following said Y dimension, according to a first direction, and
- a closing control signal for closing the selected window(s), when the drag motion of the detected pressure comprises at least a Y component following said Y dimension, according to a second direction opposite to said first direction.

The hand depicted in Figure 1 is only for illustrative purposes to represent that second region R2 is where a user must perform the drag motions, but such a hand picture does not have to be necessarily displayed by the GUI.

The computing entity C is configured to generate the opening/closing control signals even when the drag motion of the corresponding detected pressure comprises also respective X components following said X dimension, no matter with which direction, i.e. for vertical and also for diagonal drag motions.

The computing entity C is configured to maintain the generation of the opening or closing control signals, and their provision to the respective actuators, when the drag motion has stopped but the exerted pressure has not yet been released. Therefore, if, for example, a user performs a drag motion going upwards quickly so that it arrives at the upper edge of the touch screen T before the window(s) being controlled has arrived to the full closed position (due to the fact that the actuator of the window generally has a constant speed), then if the user does not release his/her finger, the window continues closing up to the full closed position.

Optionally, as shown in Figure 1, the GUI also displays touch-enable icons in the form of arrows pointing upwards and downwards, respectively, which allow a user also to control the opening/closing of the window(s) by pressing thereon. For example, a single touch thereon could perform a short opening/closing motion of the selected window(s) while a double touch could cause the window(s) to go to the full opened or closed position.

As shown in Figure 1, the GUI displays a third region R3 located at a second edge area of the touch screen T, and displaying touch-enabled icons (depicted as windows numbered with numbers 1, 2, and 3) identifying desired preset opening/closing positions for one or more windows of the plurality of windows, wherein the GUI is configured to detect a contact on the touch-enabled icons identifying desired preset opening/closing positions, and wherein the computing entity C is configured to generate opening/closing control signals according to the contact detected touch-enabled icon displayed on said third region R3.

Advantageously, the desired preset opening/closing positions are programmable by a user, the GUI and computing entity C being configured to program and thus set one or more desired opening/closing positions when a contact is made, and maintained along a predetermined time, on a location of the touch screen T displaying a respective one of the touch-enabled icons displayed on the third region R3. The one or more position detectors D detect and provide to the computing entity C current opening/closing positions of the plurality of windows, so that the computing entity C sets as said desired one or more opening/closing positions one or more of the corresponding detected current opening/closing positions.

The GUI is also configured to display on the first region R1 the opening/closing position state (detected by the position detector(s)) of the plurality of windows while being selected, and/or to display on the second region R2 the opening/closing state of the selected at least one window. For the embodiment of Figure 1, the opening/closing state of the windows is displayed on the first region R1, particularly by means of slight modifications on the touch-enable icon representing each window.

Figure 2 schematically shows a simpler version of the GUI of the system of the first aspect of the present invention, for an embodiment for which the GUI comprises a touch screen T to be preferably located in front of the rear passengers of a vehicle, to allow those rear passengers to control the operation of only the rear passenger windows.

For the embodiment of Figure 2, the first region R1 is placed below the second region R2 and only displays touch-enabled icons representing the rear passenger windows, while a third region R3 is displayed at a right edge of the touch screen T, identifying desired preset opening/closing positions (1, 2, and 3) but associated only to the rear passenger windows.

A person skilled in the art could introduce changes and modifications in the embodiments described without departing from the scope of the invention as it is defined in the attached claims.

## Claims

1. A vehicle window adjustment control system, configured to control a plurality of windows on a vehicle, comprising:
- a computing entity (C) configured to provide control signals to respective actuators of said plurality of windows to control the same to open/close; and
- a graphical user interface (GUI) comprising at least one touch screen (T) operatively connected to said computing entity (C), wherein the control signals provided by the computing entity (C) are generated in response to the detection of a user touching inputs determined by the at least one touch screen (T);
**characterized in that** said GUI is configured to display in a displaying area of the touch screen (T) having Y and X dimensions:
- a first region (R1) displaying touch-enabled icons, wherein each touch-enabled icon is associated to one of said plurality of windows, allowing a user to select at least one window to be controlled; and
- a second region (R2) displaying a window adjustment control screen associated to the selected at least one window;
**in that** the GUI is configured to sequentially detect, in collaboration with said computing entity (C), on the at least one touch screen (T):
- a contact on at least one of the touch-enabled icons located on said first region (R1), to select the at least one window to be controlled;
- an initial contact on any location of said second region (R2); and
- a pressure exerted according to a drag motion from said initial contact to any location of the second region (R2);
**in that** the computing entity (C) is configured to generate as said control signals:
- an opening control signal for opening the selected at least one window, when the drag motion of the detected pressure comprises at least a Y component following said Y dimension, according to a first direction, and
- a closing control signal for closing the selected at least one window, when the drag motion of the detected pressure comprises at least a Y component following said Y dimension, according to a second direction opposite to said first direction;
and **in that** the computing entity (C) is configured to change the opening or closing control signal previously generated and their provision to said respective actuators, from an opening control signal to a closing control signal or from a closing control signal to an opening control signal, when the GUI detects on the at least one touch screen (T) a further drag motion, wherein said further drag motion comprises at least a Y component following said Y dimension and a direction opposite to the direction of the drag motion, wherein between the drag motion and the further drag motion the exerted pressure has not been released.

2. A vehicle window adjustment control system according to claim 1, wherein the computing entity (C) is configured to generate said opening/closing control signals even when the drag motion of the corresponding detected pressure comprises also respective X components following said X dimension, no matter with which direction.

3. A vehicle window adjustment control system according to claim 1 or 2, wherein the computing entity (C) is configured to generate said opening/closing control signals independently of the length of said drag motion.

4. A vehicle window adjustment control system according to any of the previous claims, wherein the computing entity (C) is configured to generate said opening/closing control signals independently of the speed of said drag motion.

5. A vehicle window adjustment control system according to any of the previous claims, wherein the GUI is configured to display said first region (R1) at a first edge area of the touch screen (T), and said second region (R2) on an adjacent area of the touch screen (T) that is at least twice larger than said first edge area.

6. A vehicle window adjustment control system according to claim 5, wherein the GUI is configured to display said second region (R2) only after the at least one window to be controlled has been selected by a contact on at least one of the touch-enabled icons located on the first region (R1).

7. A vehicle window adjustment control system according to claim 5, wherein the GUI is configured to display said second region (R2) even when no window to be controlled has yet been selected, but to block said generation of control signals until the at least one window to be controlled has been selected by a contact on at least one of the touch-enabled icons located on the first region (R1).

8. A vehicle window adjustment control system according to claim 5, 6 or 7, wherein the GUI is configured to display a third region (R3) displaying touch-enabled icons identifying desired preset opening/closing positions for one or more windows of the plurality of windows, wherein the GUI is configured to detect a contact on said touch-enabled icons identifying desired preset opening/closing positions, and wherein the computing entity (C) is configured to generate opening/closing control signals according to the contact detected touch-enabled icon displayed on said third region (R3).

9. A vehicle window adjustment control system according to claim 8, wherein said desired preset opening/closing positions are programmable by a user, the GUI and computing entity (C) being configured to program and thus set one or more desired opening/closing positions when a contact is made, and maintained along a predetermined time, on a location of the touch screen (T) displaying a respective one of the touch-enabled icons displayed on said third region (R3).

10. A vehicle window adjustment control system according to claim 8, further comprising at least one position detector (D) operatively connected to the computing entity (C) and configured and arranged to detect current opening/closing positions of said plurality of windows, the computing entity (C) being configured to set as said desired one or more opening/closing positions one or more of the corresponding detected current opening/closing positions.

11. A vehicle window adjustment control system according to any of the previous claims 1 to 9, further comprising at least one position detector (D) operatively connected to the computing entity (C) and configured and arranged to detect current opening/closing position state of said plurality of windows, wherein the GUI is configured to display on said first region (R1) the current opening/closing position state of the plurality of windows while being selected, and/or to display on said second region (R2) the current opening/closing state of the selected at least one window.

12. A computer-implemented method, for controlling a plurality of windows on a vehicle, comprising performing the following steps:
- generating control signals, by means of a computing entity (C), in response to the detection of a user touching inputs determined by at least one touch screen (T) comprised by a graphical user interface (GUI) and that is operatively connected to said computing entity (C); and
- providing said control signals from said computing entity (C) to respective actuators of said plurality of windows to control the same to open/close;
**characterized in that** the method comprises using said GUI to display in a displaying area of the touch screen (T) having Y and X dimensions:
- a first region (R1) displaying touch-enabled icons, wherein each touch-enabled icon is associated to one of said plurality of windows, allowing a user to select at least one window to be controlled; and
- a second region (R2) displaying a window adjustment control screen associated to the selected at least one window;
**in that** the method further comprises sequentially detecting on the at least one touch screen (T), using the GUI in collaboration with said computing entity (C):
- a contact on at least one of the touch-enabled icons located on said first region (R1), to select the at least one window to be controlled;
- an initial contact on any location of said second region (R2); and
- a pressured exerted according to a drag motion from said initial contact to any location of the second region (R2),
**in that** the method further comprises the computing entity (C) generating as said control signals:
- an opening control signal for opening the selected at least one window, when the drag motion of the detected pressure comprises at least a Y component following said Y dimension, according to a first direction, and
- a closing control signal for closing the selected at least one window, when the drag motion of the detected pressure comprises at least a Y component following said Y dimension, according to a second direction opposite to said first direction; and
and **in that** the method further comprises the computing entity (C) changing the opening or closing control signal previously generated and their provision to said respective actuators, from an opening control signal to a closing control signal or from a closing control signal to an opening control signal, when the GUI detects on the at least one touch screen (T) a further drag motion, wherein said further drag motion comprises at least a Y component following said Y dimension and a direction opposite to the direction of the drag motion, wherein between the drag motion and the further drag motion the exerted pressure has not been released..

13. A computer program, comprising code instructions that when executed on one or more processors implement the steps of the method according to claim 12.

## Patentansprüche

1. Fahrzeugfenstereinstellung-Steuersystem, das konfiguriert ist, um eine Vielzahl von Fenstern an einem Fahrzeug zu steuern, umfassend:
- eine Recheneinheit (C), die konfiguriert ist, um Steuersignale an jeweilige Aktuatoren der Vielzahl von Fenstern bereitzustellen, um diese zum Öffnen/Schließen zu steuern; und
- eine grafische Benutzeroberfläche (GUI), umfassend mindestens einen Berührungsbildschirm (T), der funktionsfähig mit der Recheneinheit (C) verbunden ist, wobei die von der Recheneinheit (C) bereitgestellten Steuersignale als Reaktion auf die Erfassung von Berührungseingaben eines Benutzers erzeugt werden, die von dem mindestens einen Berührungsbildschirm (T) bestimmt werden;
**dadurch gekennzeichnet, dass** die GUI konfiguriert ist, um in einem Anzeigebereich des Berührungsbildschirms (T), der Y- und X-Abmessungen aufweist, Folgendes anzuzeigen:
- einen ersten Bereich (R1), der berührungsaktivierte Symbole anzeigt, wobei jedes berührungsaktivierte Symbol mit einem der Vielzahl von Fenstern assoziiert ist, was es einem Benutzer ermöglicht, mindestens ein Fenster auszuwählen, das gesteuert werden soll; und
- einen zweiten Bereich (R2), der einen Fenstereinstellung-Steuerungsbildschirm anzeigt, der mit dem ausgewählten mindestens einen Fenster assoziiert ist;
dadurch, dass die GUI konfiguriert ist, um in Zusammenarbeit mit der Recheneinheit (C) auf dem mindestens einen Berührungsbildschirm (T) sequentiell Folgendes zu erfassen:
- einen Kontakt auf mindestens einem der berührungsaktivierten Symbole, die sich in dem ersten Bereich (R1) befinden, um das mindestens eine Fenster auszuwählen, das gesteuert werden soll;
- einen anfänglichen Kontakt an einer beliebigen Stelle des zweiten Bereichs (R2); und
- einen Druck, der entsprechend einer Ziehbewegung von dem anfänglichen Kontakt zu einer beliebigen Stelle des zweiten Bereichs (R2) ausgeübt wird;
dass die Recheneinheit (C) konfiguriert ist, um als die Steuersignale Folgendes zu erzeugen:
- ein Öffnungssteuersignal zum Öffnen des ausgewählten mindestens einen Fensters, wenn die Ziehbewegung des erfassten Drucks mindestens eine Y-Komponente umfasst, die der Y-Abmessung gemäß einer ersten Richtung folgt, und
- ein Schließsteuersignal des mindestens einen ausgewählten Fensters, wenn die Ziehbewegung des erfassten Drucks mindestens eine Y-Komponente umfasst, die der Y-Abmessung gemäß einer zweiten Richtung entgegen der ersten Richtung folgt; und dass die Recheneinheit (C) konfiguriert ist, um das zuvor erzeugte Öffnungs- oder Schließsteuersignal und dessen Bereitstellung an die jeweiligen Aktuatoren von einem Öffnungssteuersignal zu einem Schließsteuersignal oder von einem Schließsteuersignal zu einem Öffnungssteuersignal zu ändern, wenn die GUI auf dem mindestens einen Berührungsbildschirm (T) eine weitere Ziehbewegung erfasst, wobei die weitere Ziehbewegung mindestens eine Y-Komponente umfasst, die der Y-Abmessung und einer Richtung entgegengesetzt zu der Richtung der Ziehbewegung folgt, wobei zwischen der Ziehbewegung und der weiteren Ziehbewegung der ausgeübte Druck nicht nachgelassen wurde.

2. Fahrzeugfenstereinstellung-Steuersystem nach Anspruch 1, wobei die Recheneinheit (C) konfiguriert ist, um das Öffnungs-/Schließsteuersignal auch dann zu erzeugen, wenn die Ziehbewegung des entsprechenden erfassten Drucks auch entsprechende X-Komponenten umfasst, die der X-Abmessung folgen, unabhängig davon, in welcher Richtung.

3. Fahrzeugfenstereinstellung-Steuersystem nach Anspruch 1 oder 2, wobei die Recheneinheit (C) konfiguriert ist, um das Öffnungs-/Schließsteuersignal unabhängig von der Länge der Ziehbewegung zu erzeugen.

4. Fahrzeugfenstereinstellung-Steuersystem nach einem der vorherigen Ansprüche, wobei die Recheneinheit (C) konfiguriert ist, um das Öffnungs-/Schließsteuersignal unabhängig von der Geschwindigkeit der Ziehbewegung zu erzeugen.

5. Fahrzeugfenstereinstellung-Steuersystem nach einem der vorherigen Ansprüche, wobei die GUI konfiguriert ist, um den ersten Bereich (R1) in einem ersten Randbereich des Berührungsbildschirms (T) und den zweiten Bereich (R2) in einem angrenzenden Bereich des Berührungsbildschirms (T) anzuzeigen, der mindestens doppelt so groß ist wie der erste Randbereich.

6. Fahrzeugfenstereinstellung-Steuersystem nach Anspruch 5, wobei die grafische Benutzeroberfläche konfiguriert ist, um den zweiten Bereich (R2) erst dann anzuzeigen, wenn das mindestens eine Fenster, das gesteuert werden soll, durch einen Kontakt mit mindestens einem der berührungsaktivierten Symbole ausgewählt worden ist, die sich auf dem ersten Bereich (R1) befinden.

7. Fahrzeugfenstereinstellung-Steuersystem nach Anspruch 5, wobei die GUI konfiguriert ist, um den zweiten Bereich (R2) zwar auch dann anzuzeigen, wenn noch kein Fenster ausgewählt wurde, das gesteuert werden soll, aber die Erzeugung von Steuersignalen zu blockieren, bis das mindestens eine Fenster, das gesteuert werden soll, durch einen Kontakt auf mindestens einem der berührungsaktivierten Symbole ausgewählt wurde, die sich auf dem ersten Bereich (R1) befinden.

8. Fahrzeugfenstereinstellung-Steuersystem nach Anspruch 5, 6 oder 7, wobei die GUI konfiguriert ist, um einen dritten Bereich (R3) anzuzeigen, der berührungsaktivierte Symbole anzeigt, die gewünschte voreingestellte Öffnungs-/Schließpositionen für ein oder mehrere Fenster der Vielzahl von Fenstern identifizieren, wobei die GUI konfiguriert ist, um einen Kontakt auf den berührungsaktivierten Symbolen zu erfassen, die gewünschte voreingestellte Öffnungs-/Schließpositionen identifizieren, und wobei die Recheneinheit (C) konfiguriert ist, um ein Öffnungs-/Schließsteuersignal gemäß dem durch Kontakt erfassten berührungsaktivierten Symbol zu erzeugen, das in dem dritten Bereich (R3) angezeigt wird.

9. Fahrzeugfenstereinstellung-Steuersystem nach Anspruch 8, wobei die gewünschten voreingestellten Öffnungs-/Schließpositionen von einem Benutzer programmiert werden können, wobei die grafische Benutzeroberfläche und die Recheneinheit (C) konfiguriert sind, um eine oder mehrere gewünschte Öffnungs-/Schließpositionen zu programmieren und somit einzustellen, wenn ein Kontakt an einer Stelle des Berührungsbildschirms (T), der ein entsprechendes der berührungsaktivierten Symbole anzeigt, die in dem dritten Bereich (R3) angezeigt werden, hergestellt und über eine vorbestimmte Zeit aufrechterhalten wird.

10. Fahrzeugfenstereinstellung-Steuersystem nach Anspruch 8, ferner umfassend mindestens einen Positionsdetektor (D), der funktionsfähig mit der Recheneinheit (C) verbunden und konfiguriert und angeordnet ist, um aktuelle Öffnungs-/Schließpositionen der Vielzahl von Fenstern zu erfassen, wobei die Recheneinheit (C) konfiguriert ist, um eine oder mehrere der entsprechenden erfassten aktuellen Öffnungs-/Schließpositionen als die gewünschte(n) Öffnungs-/Schließpositionen einzustellen.

11. Fahrzeugfenstereinstellung-Steuersystem nach einem der vorherigen Ansprüche 1 bis 9, ferner umfassend mindestens einen Positionsdetektor (D), der funktionsfähig mit der Recheneinheit (C) verbunden ist und konfiguriert und angeordnet ist, um den aktuellen Öffnungs-/Schließpositionszustand der Vielzahl von Fenstern zu erfassen, wobei die GUI konfiguriert ist, um auf dem ersten Bereich (R1) den aktuellen Öffnungs-/Schließpositionszustand der Vielzahl von Fenstern anzuzeigen, während sie ausgewählt wird, und/oder um auf dem zweiten Bereich (R2) den aktuellen Öffnungs-/Schließzustand des ausgewählten mindestens einen Fensters anzuzeigen.

12. Computerimplementiertes Verfahren zum Steuern einer Vielzahl von Fenstern in einem Fahrzeug, umfassend ein Ausführen der folgenden Schritte:
- Erzeugen von Steuersignalen mittels einer Recheneinheit (C) als Reaktion auf die Erfassung von Eingaben eines Benutzers, die von mindestens einem Berührungsbildschirm (T) bestimmt werden, der aus einer grafischen Benutzeroberfläche (GUI) besteht und der funktionsfähig mit der Recheneinheit (C) verbunden ist; und
- Bereitstellen der Steuersignale von der Recheneinheit (C) an jeweilige Aktuatoren der Vielzahl von Fenstern, um diese zum Öffnen/Schließen zu steuern;
**dadurch gekennzeichnet, dass** das Verfahren ein Verwenden der GUI zum Anzeigen von Folgendem in einem Anzeigebereich des Berührungsbildschirms (T), der Y- und X-Abmessungen aufweist, umfasst:
- einen ersten Bereich (R1), der berührungsaktivierte Symbole anzeigt, wobei jedes berührungsaktivierte Symbol mit einem der Vielzahl von Fenstern assoziiert ist, was es einem Benutzer ermöglicht, mindestens ein Fenster auszuwählen, das gesteuert werden soll; und
- einen zweiten Bereich (R2), der einen Fenstereinstellung-Steuerungsbildschirm anzeigt, der mit dem ausgewählten mindestens einen Fenster assoziiert ist;
dass das Verfahren ferner ein sequentielles Erfassen auf dem mindestens einen Berührungsbildschirm (T) unter Verwendung des GUI in Zusammenarbeit mit der Recheneinheit (C) von Folgendem umfasst:
- einen Kontakt auf mindestens einem der berührungsaktivierten Symbole, die sich in dem ersten Bereich (R1) befinden, um das mindestens eine Fenster auszuwählen, das gesteuert werden soll;
- einen anfänglichen Kontakt an einer beliebigen Stelle des zweiten Bereichs (R2); und
- einen Druck, der entsprechend einer Ziehbewegung von dem anfänglichen Kontakt zu einer beliebigen Stelle des zweiten Bereichs (R2) ausgeübt wird;
dass das Verfahren ferner umfasst, dass die Recheneinheit (C) als die Steuersignale Folgendes erzeugt:
- ein Öffnungssteuersignal zum Öffnen des ausgewählten mindestens einen Fensters, wenn die Ziehbewegung des erfassten Drucks mindestens eine Y-Komponente umfasst, die der Y-Abmessung gemäß einer ersten Richtung folgt, und
- ein Schließsteuersignal des mindestens einen ausgewählten Fensters, wenn die Ziehbewegung des erfassten Drucks mindestens eine Y-Komponente umfasst, die der Y-Abmessung gemäß einer zweiten Richtung entgegen der ersten Richtung folgt; und und dass das Verfahren ferner umfasst, dass die Recheneinheit (C) das zuvor erzeugte Öffnungs- oder Schließsteuersignal und dessen Bereitstellung an die jeweiligen Aktuatoren von einem Öffnungssteuersignal zu einem Schließsteuersignal oder von einem Schließsteuersignal zu einem Öffnungssteuersignal ändert, wenn die GUI auf dem mindestens einen Berührungsbildschirm (T) eine weitere Ziehbewegung erfasst, wobei die weitere Ziehbewegung mindestens eine Y-Komponente umfasst, die der Y-Abmessung und einer Richtung entgegengesetzt zu der Richtung der Ziehbewegung folgt, wobei zwischen der Ziehbewegung und der weiteren Ziehbewegung der ausgeübte Druck nicht nachgelassen wurde.

13. Computerprogramm, umfassend Code-Anweisungen, die bei Ausführung auf einem oder mehreren Prozessoren die Schritte des Verfahrens nach Anspruch 12 implementieren.

## Revendications

1. Système de commande de réglage de vitre de véhicule, configuré pour commander une pluralité de vitres sur un véhicule, comprenant :
- une entité informatique (C) configurée pour fournir des signaux de commande à des actionneurs respectifs de ladite pluralité de vitres pour commander ceux-ci pour s'ouvrir/se fermer ; et
- une interface utilisateur graphique (GUI) comprenant au moins un écran tactile (T) fonctionnellement connecté à ladite entité informatique (C), dans lequel les signaux de commande fournis par l'entité informatique (C) sont générés en réponse à la détection d'un utilisateur touchant des entrées déterminées par l'au moins un écran tactile (T) ;
**caractérisé en ce que** ladite GUI est configurée pour afficher dans une zone d'affichage de l'écran tactile (T) ayant des dimensions Y et X :
- une première région (R1) affichant des icônes activées par toucher, dans laquelle chaque icône activée par toucher est associée à l'une de ladite pluralité de vitres, de façon à permettre à un utilisateur de sélectionner au moins une vitre à commander ; et
- une deuxième région (R2) affichant un écran de commande de réglage de vitre associé à l'au moins une vitre sélectionnée ;
**en ce que** la GUI est configurée pour détecter séquentiellement, en collaboration avec ladite entité informatique (C), sur l'au moins un écran tactile (T) :
- un contact sur au moins une des icônes activées par toucher situées sur ladite première région (R1), pour sélectionner l'au moins une vitre à commander ;
- un contact initial sur un emplacement quelconque de ladite deuxième région (R2) ; et
- une pression exercée selon un mouvement de traînée dudit contact initial à un emplacement quelconque de la deuxième région (R2) ;
**en ce que** l'entité informatique (C) est configurée pour générer en tant que lesdits signaux de commande :
- un signal de commande d'ouverture pour ouvrir l'au moins une vitre sélectionnée, lorsque le mouvement de traînée de la pression détectée comprend au moins une composante Y suivant ladite dimension Y, selon une première direction, et
- un signal de commande de fermeture pour fermer l'au moins une vitre sélectionnée, lorsque le mouvement de traînée de la pression détectée comprend au moins une composante Y suivant ladite dimension Y, selon une deuxième direction opposée à ladite première direction ;
et **en ce que** l'entité informatique (C) est configurée pour modifier le signal de commande d'ouverture ou de fermeture précédemment généré et sa fourniture auxdits actionneurs respectifs, d'un signal de commande d'ouverture en un signal de commande de fermeture ou d'un signal de commande de fermeture en un signal de commande d'ouverture, lorsque la GUI détecte sur l'au moins un écran tactile (T) un mouvement de traînée supplémentaire, dans lequel ledit mouvement de traînée supplémentaire comprend au moins une composante Y suivant ladite dimension Y et une direction opposée à la direction du mouvement de traînée, dans lequel, entre le mouvement de traînée et le mouvement de traînée supplémentaire, la pression exercée n'a pas été relâchée.

2. Système de commande de réglage de vitre de véhicule selon la revendication 1, dans lequel l'entité informatique (C) est configurée pour générer lesdits signaux de commande d'ouverture/fermeture même lorsque le mouvement de traînée de la pression détectée correspondante comprend en outre des composantes X respectives suivant ladite dimension X, quelle que soit la direction.

3. Système de commande de réglage de vitre de véhicule selon la revendication 1 ou 2, dans lequel l'entité informatique (C) est configurée pour générer lesdits signaux de commande d'ouverture/fermeture indépendamment de la longueur dudit mouvement de traînée.

4. Système de commande de réglage de vitre de véhicule selon l'une quelconque des revendications précédentes, dans lequel l'entité informatique (C) est configurée pour générer lesdits signaux de commande d'ouverture/fermeture indépendamment de la vitesse dudit mouvement de traînée.

5. Système de commande de réglage de vitre de véhicule selon l'une quelconque des revendications précédentes, dans lequel la GUI est configurée pour afficher ladite première région (R1) au niveau d'une première zone de bord de l'écran tactile (T), et ladite deuxième région (R2) sur une zone adjacente de l'écran tactile (T) qui est au moins deux fois plus grande que ladite première zone de bord.

6. Système de commande de réglage de vitre de véhicule selon la revendication 5, dans lequel la GUI est configurée pour afficher ladite deuxième région (R2) uniquement après que l'au moins une vitre à commander ait été sélectionnée par un contact sur au moins une des icônes activées par toucher situées sur la première région (R1).

7. Système de commande de réglage de vitre de véhicule selon la revendication 5, dans lequel la GUI est configurée pour afficher ladite deuxième région (R2) même lorsqu'aucune vitre à commander n'a encore été sélectionnée, mais pour bloquer ladite génération de signaux de commande jusqu'à ce que l'au moins une vitre à commander ait été sélectionnée par un contact sur au moins une des icônes activées par toucher situées sur la première région (R1).

8. Système de commande de réglage de vitre de véhicule selon la revendication 5, 6 ou 7, dans lequel la GUI est configurée pour afficher une troisième région (R3) affichant des icônes activées par toucher identifiant des positions d'ouverture/fermeture prédéfinies souhaitées pour une ou plusieurs vitres de la pluralité de vitres, dans lequel la GUI est configurée pour détecter un contact sur lesdites icônes activées par toucher identifiant des positions d'ouverture/fermeture prédéfinies souhaitées, et dans lequel l'entité informatique (C) est configurée pour générer des signaux de commande d'ouverture/fermeture conformément à l'icône activée par toucher détectée par contact affichée sur ladite troisième région (R3).

9. Système de commande de réglage de vitre de véhicule selon la revendication 8, dans lequel lesdites positions d'ouverture/fermeture prédéfinies souhaitées sont programmables par un utilisateur, la GUI et l'entité informatique (C) étant configurées pour programmer et donc définir une ou plusieurs positions d'ouverture/fermeture souhaitées lorsqu'un contact est établi, et maintenu pendant un temps prédéterminé, sur un emplacement de l'écran tactile (T) affichant l'une respective des icônes activées par toucher affichées sur ladite troisième région (R3).

10. Système de commande de réglage de vitre de véhicule selon la revendication 8, comprenant en outre au moins un détecteur de position (D) fonctionnellement connecté à l'entité informatique (C) et configuré et agencé pour détecter des positions d'ouverture/fermeture actuelles de ladite pluralité de vitres, l'entité informatique (C) étant configurée pour définir, en tant que lesdites une ou plusieurs positions d'ouverture/fermeture souhaitées, une ou plusieurs des positions d'ouverture/fermeture actuelles détectées correspondantes.

11. Système de commande de réglage de vitre de véhicule selon l'une quelconque des revendications précédentes 1 à 9, comprenant en outre au moins un détecteur de position (D) fonctionnellement connecté à l'entité informatique (C) et configuré et agencé pour détecter un état de position actuel d'ouverture/fermeture de ladite pluralité de vitres, dans lequel la GUI est configurée pour afficher sur ladite première région (R1) l'état de position actuel d'ouverture/fermeture de la pluralité de vitres tout en étant sélectionné, et/ou pour afficher sur ladite deuxième région (R2) l'état actuel d'ouverture/fermeture de l'au moins une vitre sélectionnée.

12. Procédé mis en oeuvre par ordinateur, pour commander une pluralité de vitres sur un véhicule, comprenant la conduite des étapes suivantes :
- génération de signaux de commande, au moyen d'une entité informatique (C), en réponse à la détection d'un utilisateur touchant des entrées déterminée par au moins un écran tactile (T) compris dans une interface utilisateur graphique (GUI) et qui est fonctionnellement connecté à ladite entité informatique (C) ; et
- fourniture desdits signaux de commande depuis ladite entité informatique (C) aux actionneurs respectifs de ladite pluralité de vitres pour commander celles-ci pour s'ouvrir/se fermer ;
**caractérisé en ce que** le procédé comprend l'utilisation de ladite GUI pour afficher dans une zone d'affichage de l'écran tactile (T) ayant des dimensions Y et X :
- une première région (R1) affichant des icônes activées par toucher, dans laquelle chaque icône activée par toucher est associée à l'une de ladite pluralité de vitres, de façon à permettre à un utilisateur de sélectionner au moins une vitre à commander ; et
- une deuxième région (R2) affichant un écran de commande de réglage de vitre associé à l'au moins une vitre sélectionnée ;
**en ce que** le procédé comprend en outre la détection séquentielle sur l'au moins un écran tactile (T), au moyen de la GUI en collaboration avec ladite entité informatique (C) de :
- un contact sur au moins une des icônes activées par toucher situées sur ladite première région (R1), pour sélectionner l'au moins une vitre à commander ;
- un contact initial sur un emplacement quelconque de ladite deuxième région (R2) ; et
- une pression exercée selon un mouvement de traînée dudit contact initial à un emplacement quelconque de la deuxième région (R2),
**en ce que** le procédé comprend en outre l'entité informatique (C) générant, en tant que lesdits signaux de commande :
- un signal de commande d'ouverture pour ouvrir l'au moins une vitre sélectionnée, lorsque le mouvement de traînée de la pression détectée comprend au moins une composante Y suivant ladite dimension Y, selon une première direction, et
- un signal de commande de fermeture pour fermer l'au moins une vitre sélectionnée, lorsque le mouvement de traînée de la pression détectée comprend au moins une composante Y suivant ladite dimension Y, selon une deuxième direction opposée à ladite première direction ; et
et **en ce que** le procédé comprend en outre l'entité informatique (C) modifiant le signal de commande d'ouverture ou de fermeture précédemment généré et sa fourniture auxdits actionneurs respectifs, d'un signal de commande d'ouverture en un signal de commande de fermeture ou d'un signal de commande de fermeture en un signal de commande d'ouverture, lorsque la GUI détecte sur l'au moins un écran tactile (T) un mouvement de traînée supplémentaire, dans lequel ledit mouvement de traînée supplémentaire comprend au moins une composante Y suivant ladite dimension Y et une direction opposée à la direction du mouvement de traînée, dans lequel, entre le mouvement de traînée et le mouvement de traînée supplémentaire, la pression exercée n'a pas été relâchée.

13. Programme informatique, comprenant des instructions de code qui, lorsqu'elles sont exécutées sur un ou plusieurs processeurs, mettent en oeuvre les étapes du procédé selon la revendication 12.
